# FASCICULE DE BREVET EUROPEEN

(11) **EP 3 022 526 B1**
(45) Date de publication et mention de la délivrance du brevet: **19.06.2019**
(21) Numéro de dépôt: 14750575.4
(22) Date de dépôt: 17.07.2014
(51) Int. Cl.: G01D 5/58, G01B 5/08, G01B 5/06, G01B 11/08

(54) **DISPOSITIF DE CONTRÔLE DIMENSIONNEL DE RÉCIPIENTS A DÉTECTION OPTIQUE DE CONTACT**
VORRICHTUNG ZUR ABMESSUNGSÜBERPRÜFUNG VON BEHÄLTERN MIT KONTAKT-OPTISCHER DETEKTION
DEVICE FOR THE DIMENSIONAL INSPECTION OF CONTAINERS HAVING CONTACT OPTICAL DETECTION

(30) Priorité: 18.07.2013 FR 1357062
(43) Date de publication de la demande: 25.05.2016
(73) Titulaire: Tiama, 69390 Vourles (FR)
(72) Inventeur: LEPRAT, Etienne, F-69110 Sainte Foy Les Lyon (FR)
(74) Mandataire: Thibault, Jean-Marc
(86) Numéro de dépôt international: PCT/FR2014/051830
(87) Numéro de publication internationale: WO 2015/007993

(56) Documents cités:
- WO-A1-2007/096585
- WO-A1-2012/042175
- JP-A- 2012 129 454

## Description

La présente invention concerne le domaine technique de l'inspection d'objets creux ou récipients au sens général, tels que par exemple des bouteilles, des pots, des flacons notamment en verre en vue de déceler d'éventuels défauts dimensionnels ou de surface présentés par un tel récipient.

Dans le domaine technique de l'inspection de récipients notamment en verre, il est prévu après leur fabrication, de réaliser différents contrôles notamment du goulot ou de la bague du récipient (diamètres interne/externe, étanchéité, hauteur) et du col du récipient (diamètre intérieur, profil intérieur, brochage).

Afin de réaliser de telles inspections, il est connu d'utiliser un ou plusieurs dispositifs comportant chacun une tête d'inspection destinée à être abaissée soit sur une distance précise en fonction de la nature du récipient, soit pour venir en contact avec le récipient, soit pour être en appui sur le récipient le temps de l'inspection. De manière classique, une telle inspection est réalisée à l'aide d'une machine présentant soit un convoyeur linéaire adapté pour maintenir les récipients dans des positions précises, soit un convoyeur à étoiles, avec un mouvement circulaire indexé pour placer les récipients en relation avec différents postes de contrôle. Chaque tête d'inspection est déplacée selon un mouvement vertical alternatif pour un convoyeur à étoiles tandis que pour un convoyeur linéaire, la tête d'inspection présente de façon supplémentaire, un déplacement horizontal.

Le brevet FR 2 818 748 décrit un dispositif d'inspection comportant une tête montée sur une glissière horizontale qui est fixée sur un chariot déplacé selon des mouvements alternatifs verticaux par une courroie montée entre une poulie folle et une poulie menée par un servomoteur. L'un des inconvénients d'un tel dispositif est la masse déplacée relativement importante, ce qui limite la vitesse et l'accélération de déplacement de la tête d'inspection. Il s'ensuit que la cadence d'inspection des récipients est limitée, ce qui représente un inconvénient majeur dans le processus de production en ligne de récipients. Un autre inconvénient d'un tel dispositif connu apparaît lorsque la tête d'inspection est destinée à venir en contact avec le récipient. En effet, la course de la tête d'inspection n'est pas définie à cause de la dispersion de hauteur des récipients et des défauts qui influent sur cette course comme ceux ne permettant pas à la tête d'inspection de descendre lors d'une opération de brochage. Aussi, compte tenu de l'indétermination de cette course et de la masse embarquée, il peut survenir un choc important entre la tête d'inspection et le récipient, ce qui est susceptible d'entraîner la détérioration du récipient et/ou de la tête d'inspection. Enfin un tel dispositif ne permet pas de déterminer la provenance des défauts détectés.

Le brevet GB 1 432 120 décrit un dispositif pour inspecter les récipients comportant plusieurs postes de contrôle dont l'un vise à contrôler la conformité dimensionnelle des bagues et des cols des récipients. Ce poste de contrôle comporte un équipage mobile entraîné par un système de motorisation selon un mouvement alternatif par rapport au bâti du dispositif, dans une direction de déplacement parallèle à l'axe de symétrie des récipients. Cet équipage mobile est équipé d'un calibre externe de contrôle de l'extérieur de la bague des récipients et d'un calibre interne de contrôle de l'intérieur de la bague et du col des récipients.

Le dispositif décrit par ce document GB 1 432 120 possède les mêmes inconvénients que le dispositif d'inspection décrit par le brevet FR 2 818 748.

Il est également connu par la demande de brevet FR 2 174 203 une machine d'inspection pour les bagues et cols de récipients comportant un équipage mobile entraîné par un système de motorisation selon un mouvement alternatif cyclique par rapport à un bâti de la machine. L'équipage mobile est déplacé selon une direction verticale parallèle à l'axe de symétrie des récipients. L'équipage mobile est équipé d'un calibre ou gabarit de contrôle de l'extérieur de la bague. Ce gabarit est monté à l'extrémité d'un manchon inférieur guidé en coulissement vertical alternatif par rapport au bâti.

L'équipage mobile comporte également un manchon supérieur monté coaxialement à l'intérieur du manchon inférieur et pourvu d'un calibre ou d'une jauge de contrôle du goulot. Ce manchon supérieur est entraîné en déplacement vertical alternatif pour assurer l'engagement de la jauge de contrôle à l'intérieur du goulot du récipient.

Chaque manchon est pourvu d'un collet destiné à passer à l'intérieur d'une encoche d'un levier lorsque le gabarit et la jauge occupent une position correspondant à un récipient non défectueux. Si le récipient ne respecte pas les tolérances prescrites, l'un et/ou l'autre des manchons occupe une position dans laquelle le collet actionne le levier qui déclenche un commutateur indiquant que les dimensions de la bouteille ne répondent pas aux tolérances prédéterminées.

Un tel dispositif permet de savoir si le défaut détecté provient du goulot ou de l'extérieur de la bague. Toutefois, un tel dispositif ne permet pas de déterminer la nature du défaut dimensionnel détecté par la jauge comme par exemple un goulot trop étroit ou trop grand et par le gabarit comme par exemple une bague trop grande ou trop petite.

Or, il apparaît important de discriminer la nature des défauts présentés par les récipients défectueux pour permettre d'agir au mieux sur le procédé de fabrication de ces récipients.

La demande de brevet FR 2 973 107 décrit un dispositif de contrôle dimensionnel de récipients mettant en oeuvre une tête de calibrage comportant notamment un calibre externe et un calibre interne. Un tel dispositif comporte également des moyens de détection d'un écart de position du calibre interne par rapport au calibre externe permettant de caractériser le défaut de débouchage. Ces moyens de détection comportent des moyens de visée optique selon une direction perpendiculaire au déplacement de l'équipage mobile comportant un émetteur d'un faisceau lumineux et une cellule de réception placée en vis-à-vis. L'écart de position du calibre interne par rapport au calibre externe est détecté grâce à l'actionnement d'une cible qui obstrue ou non la cellule de réception. La cellule détecte donc leur position relative lorsque l'équipage mobile est en position basse, les calibres étant normalement au contact maximum avec le récipient. Un tel dispositif permet de détecter des défauts de diamètre de débouchage. Toutefois, un tel dispositif ne permet pas de déterminer la conformité dimensionnelle des bagues et/ou des cols des récipients et des différents types de défauts pour les récipients dimensionnellement non conformes comme la hauteur et le diamètre interne de brochage et le diamètre de débouchage et le diamètre externe.

Les demandes de brevet FR 2 965 344 et WO 2012/042175 A1 décrivent chacune un dispositif d'inspection pour les bagues et cols de récipients comportant un équipage mobile entraîné en mouvement alternatif par rapport à un bâti selon une direction de déplacement parallèle à l'axe de symétrie des récipients. Cet équipage mobile est équipé d'un calibre externe de contrôle de l'extérieur de la bague des récipients et d'un calibre interne de contrôle de l'intérieur de la bague et du col des récipients. Les calibres externe et interne sont montés mobiles indépendamment l'un de l'autre et par rapport à l'équipage mobile, selon une direction de déplacement parallèle à la direction de déplacement de l'équipage mobile.

Un tel dispositif comporte également un système de mesure dans la direction de déplacement de la position de l'équipage mobile par rapport au bâti. Ce dispositif comporte également un système de détection du contact intervenant entre le calibre interne et le récipient lors du mouvement de l'équipage mobile permettant de détecter les occurrences de contact du calibre interne avec le récipient. De même, ce dispositif comporte un système de détection du contact intervenant entre le calibre externe et le récipient lors du mouvement de l'équipage mobile permettant de détecter les occurrences de contact entre le calibre externe et le récipient. En fonction des mesures de la position de l'équipage mobile et des occurrences de contact entre les calibres et le récipient, l'unité de traitement de ce dispositif permet de déterminer la conformité dimensionnelle des bagues et/ou des cols des récipients et les types de défauts pour les récipients dimensionnellement non conformes.

Chaque système de détection de contact comprend un capteur dont une partie est montée solidaire de l'équipage mobile et une autre partie solidaire des calibres. Le capteur de contact détecte ainsi la mise en vis-à-vis des parties du capteur au moment du contact des calibres avec le récipient. Les inconvénients d'un tel dispositif sont liés au montage du capteur sur l'équipage mobile qui impose la mise en place d'une connexion électrique entre le capteur embarqué et l'unité de traitement fixe. Outre l'inconvénient lié à la surcharge à déplacer, les vitesses et accélérations de l'équipement mobile imposent des contraintes sur le capteur embarqué entraînant sa fragilité.

Par ailleurs, dans l'état de la technique, il est connu par notamment les documents WO 2007/096585 et JP 2012 129454, des capteurs optiques comportant un émetteur de lumière et un récepteur de lumière. De tels capteurs optiques permettent de détecter la présence d'un objet venant se positionner entre l'émetteur de lumière et le récepteur de lumière. De tels capteurs qui détectent la présence d'un objet ne donnent pas l'information sur les occurrences de contact entre les calibres et les récipients, cette information étant indispensable pour vérifier la conformité dimensionnelle des bagues et des cols des récipients.

L'objet de la présente invention vise à remédier aux inconvénients de l'état de la technique en proposant un dispositif permettant d'inspecter à haute cadence la bague et le col de récipients pour vérifier la conformité dimensionnelle des bagues et des cols des récipients et connaître le type de défauts détectés, un tel dispositif étant résistant, précis et peu encombrant.

Pour atteindre un tel objectif, l'objet de l'invention concerne un dispositif d'inspection pour les bagues et cols de récipients, comportant :
- un équipage mobile entraîné par rapport à un bâti, en un mouvement alternatif selon une direction de déplacement parallèle à l'axe de symétrie des récipients et avec une course maximale, l'équipage mobile étant équipé d'un calibre externe de contrôle de l'extérieur de la bague des récipients et d'un calibre interne de contrôle de l'intérieur de la bague et du col des récipients, les calibres externe et interne étant montés mobiles indépendamment l'un de l'autre et par rapport à l'équipage mobile selon une direction de déplacement parallèle à la direction de déplacement de l'équipage mobile,
- un système de mesure de la position de l'équipage mobile par rapport au bâti, dans la direction de déplacement, les mesures de la position de l'équipage mobile étant fournies à une unité de traitement,
- un système de détection du contact intervenant entre le calibre interne et le récipient, lors du mouvement de l'équipage mobile, les occurrences de contact étant fournies à l'unité de traitement,
- un système de détection du contact intervenant entre le calibre externe et le récipient, lors du mouvement de l'équipage mobile, les occurrences de contact étant fournies à l'unité de traitement,
- et une unité de traitement permettant qu'en fonction des mesures de la position de l'équipage mobile et des occurrences de contact entre les calibres et le récipient, de déterminer la conformité dimensionnelle des bagues et/ou cols des récipients et les types de défauts pour les récipients dimensionnellement non conformes.

Selon l'invention, chaque système de détection du contact d'un calibre comporte :
- un système d'émission-réception d'un faisceau optique selon une direction parallèle à la direction de déplacement de l'équipage mobile et selon un segment de longueur au moins égale à la course maximale de l'équipage mobile, le système d'émission étant porté par le bâti,
- un mécanisme embarqué sur l'équipage mobile, de transformation du mouvement de déplacement du calibre par rapport à l'équipage mobile, en un mouvement venant obstruer ou cesser d'obstruer le faisceau optique pour détecter l'occurrence du contact du calibre quelle que soit la position de l'équipage mobile.

De plus, le dispositif selon l'invention comporte en outre en combinaison au moins l'une et/ou l'autre des caractéristiques additionnelles suivantes :
- le mécanisme de transformation de mouvement transforme le mouvement de déplacement linéaire du calibre en un mouvement de pivotement d'une cible dans un plan contenant le faisceau optique,
- le mécanisme de transformation de mouvement comporte un mécanisme à ciseaux articulés et monté entre l'équipage mobile et le calibre,
- le mécanisme de transformation de mouvement transforme le mouvement de déplacement linéaire du calibre en un mouvement de rotation dans un plan perpendiculaire à la direction du faisceau optique,
- le mécanisme de transformation de mouvement comporte une liaison hélicoïdale associée à une liaison plan,
- le système d'émission-réception du faisceau optique comporte un émetteur et un récepteur de faisceau optique montés en vis-à-vis en étant écartés d'au moins la course maximale de l'équipage mobile,
- le système d'émission-réception du faisceau optique comporte un émetteur et un récepteur du faisceau optique montés ensemble et à l'opposé desquels est monté un réflecteur optique.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en coupe élévation schématique du dispositif d'inspection conforme à l'invention en position haute par rapport à un récipient.
La **Figure 2** est une vue en coupe élévation schématique du dispositif d'inspection conforme à l'invention en position de contrôle d'un récipient.
La **Figure 3** est une vue en coupe élévation schématique montrant une variante de réalisation du système d'émission-réception d'un faisceau optique.
La **Figure 4** est une vue en coupe élévation schématique montrant un autre exemple de réalisation d'un mécanisme de transformation de mouvement faisant partie du système de détection conforme à l'invention.

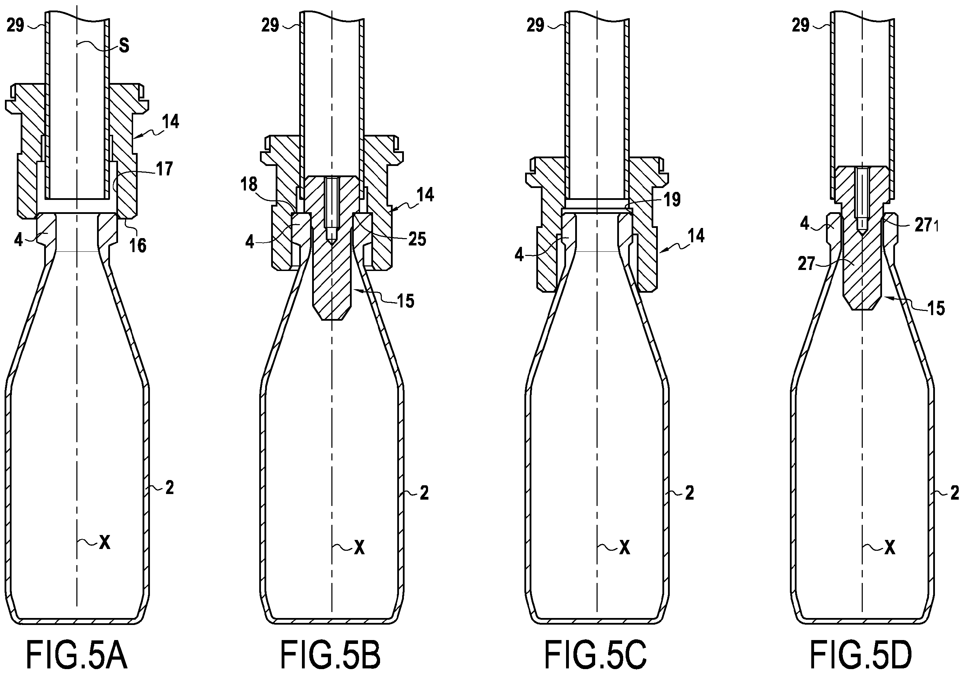

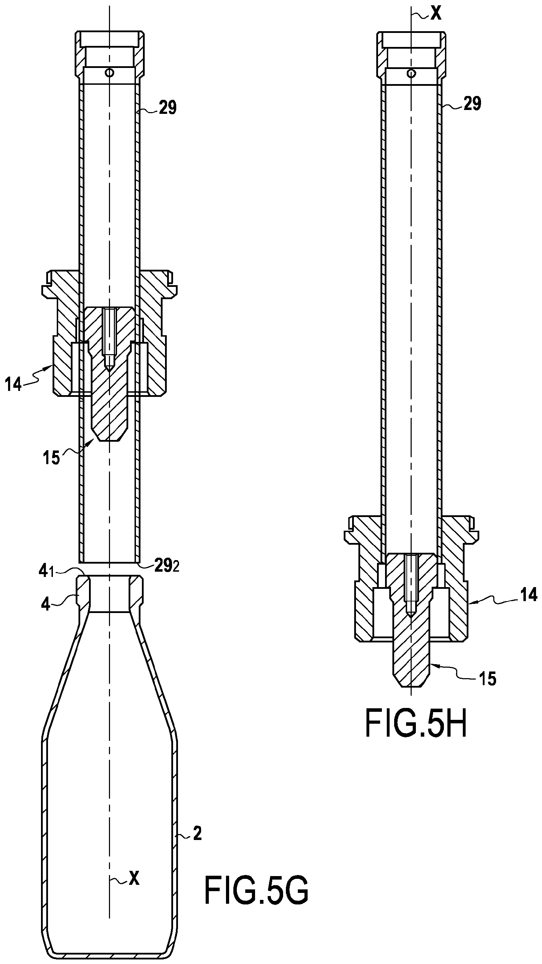

Les **Figures 5A** et **5H** sont des vues en coupe élévation montrant différentes configurations du dispositif d'inspection correspondant respectivement à un contrôle du diamètre de bague mauvais correspondant à une bague trop grande, un débouchage correct et un diamètre bague correct, un contrôle du diamètre de bague mauvais correspondant à une bague trop petite, un débouchage mauvais correspondant à un débouchage trop petit, un débouchage mauvais correspondant à un débouchage trop grand, un débouchage mauvais correspondant à un débouchage col bouché, un dégagement des outillages et une détection correspondant à l'absence d'un récipient.

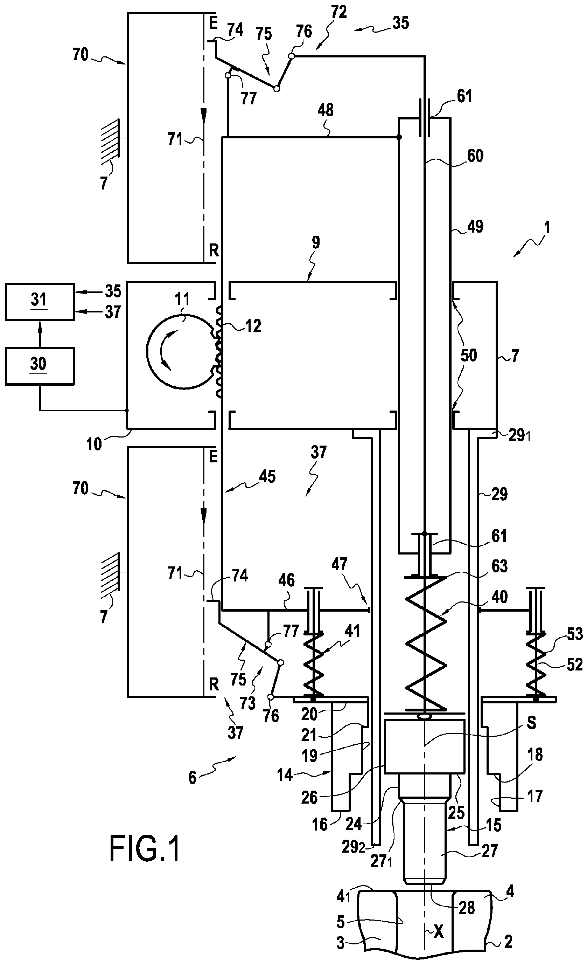

Tel que cela ressort plus précisément de la **Fig. 1****,** l'objet de l'invention concerne un dispositif d'inspection **1** permettant d'inspecter à haute cadence, des récipients creux **2** de toute nature appropriée par exemple en verre présentant un axe de symétrie **X.** De manière classique, chaque récipient **2** présente un col **3** pourvu d'une bague **4** délimitant intérieurement une ouverture **5** d'accès à l'intérieur du récipient **2.** De manière plus précise, le dispositif d'inspection **1** permet de contrôler le col **3** et la bague **4** de récipients **2** afin de déterminer la conformité dimensionnelle des bagues et des cols des récipients et le type de défauts pour les récipients dimensionnellement non-conformes.

Le dispositif d'inspection **1** est destiné à équiper toute machine de production de récipients qui sont amenés à haute cadence, au droit du dispositif d'inspection **1** à l'aide de tous moyens appropriés. La machine de production et les moyens d'amenée du récipient jusqu'au dispositif d'inspection **1** et les moyens de manutention des récipients ne sont pas décrits car ils sont bien connus de l'homme du métier et ne font pas partie précisément de l'objet de l'invention. Le dispositif d'inspection **1** est monté sur le châssis d'une machine d'inspection intégrée ou rapportée dans la machine de production. Dans l'exemple illustré, il est à noter que les récipients **2** sont amenés au droit du système d'inspection **1** en étant dans une position dressée ou verticale de sorte que l'axe **X** de symétrie de la bouteille peut être considéré comme s'étendant selon une direction verticale.

Le dispositif d'inspection **1** comporte un équipage **6** mobile par rapport à un bâti porteur **7**. L'équipage mobile **6** est entraîné par un système de motorisation **9** pour assurer le déplacement alternatif de l'équipage mobile dans une direction de déplacement parallèle à l'axe de symétrie **X** des récipients **2**. Dans l'exemple illustré, l'équipage mobile **6** présente ainsi pour chaque récipient **2**, un mouvement de descente et un mouvement de remontée selon une direction de déplacement vertical puisque la bouteille **2** occupe une position dressée lors de son inspection par le dispositif **1** selon l'invention. Bien entendu, le dispositif **1** est apte à inspecter les bouteilles placées dans des positions différentes.

Selon une caractéristique préférée de réalisation, le système de motorisation **9** comporte un servomoteur **10** dont le corps est fixé sur le bâti porteur **7**. Le servomoteur **10** est pourvu d'un pignon de sortie **11** coopérant avec une crémaillère **12** faisant partie de l'équipage mobile **6**. Le servomoteur **10** est piloté pour entraîner en rotation le pignon de sortie **11** dans un sens et dans un sens contraire pour imprimer de manière cyclique, à la crémaillère **12**, un mouvement de descente et un mouvement de remontée, selon l'axe vertical.

L'équipage mobile **6** comporte un calibre externe **14** de contrôle de l'extérieur de la bague **4** des récipients et un calibre interne **15** de contrôle de l'intérieur de la bague et du col des récipients **2**. Comme cela sera expliqué dans la suite de la description, les calibres **14**, **15** sont entraînés en déplacement alternatif par l'équipage mobile **6** pour venir en contact avec le récipient **2** au cours du mouvement de descente de l'équipage mobile **6**.

Plus précisément, les calibres **14**, **15** sont montés de manière concentrique et possèdent un axe commun de symétrie **S** s'étendant selon une direction verticale de manière qu'en position d'inspection, l'axe de symétrie **X** du récipient **2** et l'axe de symétrie **S** soient alignés. A chaque mouvement de descente de l'équipage mobile **6** selon l'axe vertical **S**, les calibres **14**, **15** contrôlent les dimensions de la bague et du col du récipient présent. Le mouvement de remontée de l'équipage mobile est mis à profit pour enlever le récipient contrôlé et à amener le prochain récipient à inspecter.

Le calibre externe **14** se présente sous la forme d'une cloche de forme annulaire centrée sur l'axe de symétrie **S**. Le calibre externe **14** présente une extrémité inférieure dite d'introduction **16** délimitant une ouverture ou un alésage de calibrage **17**. Le diamètre interne de cet alésage de calibrage **17** est égal au plus grand diamètre pouvant être toléré pour la bague **4** d'un récipient. Ainsi, comme illustré sur la **Fig**. **5A**, si la bague **4** du récipient présente un diamètre supérieur au diamètre de l'alésage de calibrage **17** (bague trop grande), alors la bague **4** du récipient vient en butée sur l'extrémité inférieure **16** du calibre externe **14**.

L'alésage de calibrage **17** est limité par un épaulement intérieur **18** destiné à venir en contact ou en appui sur le buvant ou le rebord **4₁** de la bague **4**.

Selon une variante préférée de réalisation, le calibre externe **14** comporte également une ouverture ou alésage d'échappement **19** aménagé au-delà de l'épaulement **18** et communiquant avec l'ouverture de calibrage **17** et débouchant à la deuxième extrémité **20** du calibre externe opposée à la première extrémité inférieure **16**. Cet alésage d'échappement **19** est pourvu d'un épaulement d'arrêt **21** situé entre la deuxième extrémité **20** et l'épaulement **18**.

Ainsi, l'alésage de calibrage **17** et l'alésage d'échappement **19** délimitent entre eux, l'épaulement annulaire **18** dont la largeur correspond à la plage de tolérance pour des largeurs de bagues **4** conformes (**Fig. 5B**). En d'autres termes, dans tous les cas où la bague **4** présente un diamètre conforme alors le calibre externe **14** vient en appui par son épaulement **18** sur le rebord **4₁** de la bague **4**. Dans le cas où la bague **4** présente un diamètre inférieur au diamètre de l'alésage d'échappement **19** (**Fig. 5C**), l'alésage d'échappement **19** du calibre externe **14** reçoit la bague **4** qui vient ensuite en contact avec le calibre externe **14** soit avec l'extrémité inférieure **16** soit avec l'épaulement d'arrêt **21**.

Le calibre interne **15** se présente sous la forme d'une broche ou d'une jauge montée à l'intérieur du calibre externe **14** et de manière concentrique par rapport au calibre externe **14**. Le calibre **15** qui présente une forme symétrique centrée sur l'axe de symétrie **S**, délimite un tronçon inférieur **24** séparé par un épaulement **25**, d'un tronçon supérieur **26**. Le diamètre du tronçon supérieur **25** est supérieur au diamètre présenté par le tronçon inférieur **24**. Le diamètre du tronçon inférieur **24** présente un diamètre correspondant au diamètre minimal pouvant être toléré par le goulot du récipient **2** alors que le diamètre du tronçon supérieur **26** correspond au diamètre maximal pouvant être toléré pour le goulot du récipient. Ainsi, l'épaulement annulaire **25** qui est délimité entre les tronçons supérieur **26** et inférieur **24** présente une largeur correspondant à la plage de tolérance pour le diamètre interne du col du récipient. Dans le cas où le col **3** présente un diamètre qui est dans la plage de tolérance, le calibre interne **15** vient en butée par son épaulement **25** sur le rebord **4₁** de la bague (**Fig. 5B**).

Selon une variante préférée de réalisation, le calibre interne **15** comporte également à partir du tronçon inférieur **24** un tronçon d'extrémité **27** présentant un diamètre inférieur par rapport au diamètre du tronçon inférieur **24**. Le tronçon d'extrémité **27** qui possède une extrémité libre **28** ou de butée, est relié au tronçon inférieur **24** par un collier de raccordement **27₁.**

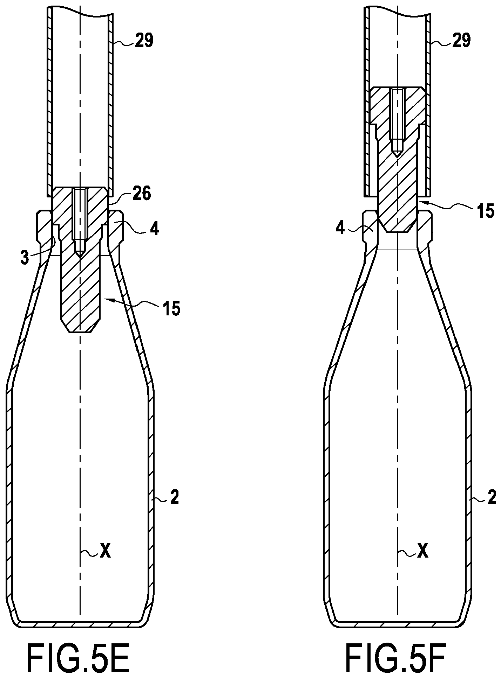

Lorsque le col **3** du récipient **2** présente un diamètre trop petit, alors la broche vient en butée par son tronçon d'extrémité **27** et en particulier par son collier de raccordement **27₁** sur le récipient **2** (**Fig. 5D**). Si le diamètre interne du col **3** est supérieur au diamètre maximal de la plage de tolérance alors le tronçon supérieur **26** pénètre à l'intérieur du col **3** du récipient **2** (**Fig. 5E**). Par ailleurs, dans le cas où le col du récipient présente un défaut de bouchage (**Fig. 5F**), le calibre interne **15** vient en butée au niveau du rebord de la bague, par le tronçon d'extrémité **27**.

Selon une caractéristique préférée de réalisation, un tube extracteur **29** est interposé entre le calibre externe **14** et le calibre interne **15**. Ce tube extracteur **29** comporte une première extrémité **29₁** fixée au bâti **7** de manière que son axe de symétrie longitudinal se trouve confondu avec l'axe de symétrie **S**. Le tube extracteur **29** comporte une deuxième extrémité **29₂** opposée à la première extrémité **29₁**, s'étendant entre le calibre interne **15** et le calibre externe **14**. En d'autres termes, le calibre externe **14** s'étend à l'extérieur du tube extracteur **29** tandis que le calibre interne **15** s'étend à l'intérieur du tube extracteur **29**.

Le diamètre du tube extracteur **29** est adapté pour permettre de venir en contact sur le rebord **4₁** de la bague **4** en cas de remontée du récipient avec l'équipage mobile **6** permettant de dégager le récipient par rapport à l'équipage mobile **6**. (**Fig. 5G**).

Il doit être noté que le calibre externe **14** et le calibre interne **15** détectent chaque défaut à un niveau donné de leur déplacement selon l'axe vertical qui est différent d'un défaut à l'autre. Ainsi, le calibre interne **15** occupe par exemple une altitude plus haute lors de la détection d'un col bouché (**Fig. 5F**) par rapport à l'altitude occupée lorsque le calibre interne **15** détecte un col avec des dimensions correctes (**Fig. 5B**). De même, le calibre externe **14** occupe, lors de la détection d'un diamètre de bague trop grand (**Fig. 5A**), une position qui à une altitude supérieure par rapport à la position occupée par ledit calibre externe **14** lors de la détection d'un diamètre de bague trop petit (**Fig. 5C**).

Le dispositif d'inspection **1** comporte également un système **30** de mesure de la position de l'équipage mobile **6** par rapport au bâti dans la direction de déplacement de l'équipage mobile. Ce système **30** peut être réalisé par tous moyens permettant de connaître la position, selon l'axe de déplacement, de l'équipage mobile **6**. Selon une variante préférée de réalisation, le système de mesure **30** comporte un capteur de position faisant partie du servomoteur **11**. Un tel système de mesure **30** permet ainsi de connaître la position de l'équipage mobile **6** et par suite des calibres interne **15** et externe **14** par rapport au bâti **7**, selon la direction verticale dans l'exemple illustré. En d'autres termes, un tel système de mesure **30** permet de donner selon un repère de distance s'établissant selon l'axe vertical, l'abscisse de l'équipage mobile **6** par rapport à une origine.

Ce système de mesure **30** est relié à une unité de traitement **31** de tous types connus en soi par exemple se présentant sous la forme d'un micro-ordinateur. Le système de mesure **30** fournit ainsi à l'unité de traitement **31**, les mesures de la position de l'équipage mobile **6**. Dans la mesure où la position des calibres **14**, **15** est connue par rapport à l'équipage mobile **6**, l'unité de traitement **31** connaît la position des calibres **14**, **15** par rapport au bâti fixe.

Le système d'inspection **1** comporte également un système **35** de détection du contact intervenant entre le calibre interne **15** et le récipient **2** lors du mouvement de l'équipage mobile **6**. Ce système de détection **35** est relié à l'unité de traitement **31**. L'unité de traitement **31** est ainsi apte à connaître les occurrences de contact entre le calibre interne **15** et le récipient **2**.

Le système d'inspection **1** comporte également un système de détection **37** du contact intervenant entre le calibre externe **14** et le récipient **2** lors du mouvement de l'équipage mobile **6**. Ce système de détection **37** est relié à l'unité de traitement **31**. Cette unité de traitement **31** est ainsi apte à connaître les occurrences de contact entre le calibre externe **14** et le récipient **2**.

Par ailleurs, le calibre externe **14** et le calibre interne **15** sont montés mobiles selon la direction de déplacement de manière indépendante l'un de l'autre et par rapport à l'équipage mobile **6**. En d'autres termes, il doit être compris que chaque calibre **14**, **15** comporte une possibilité de déplacement individuel selon la direction de déplacement vertical lors du contact du calibre avec le récipient **2**.

De manière avantageuse, le dispositif d'inspection **1** comporte un mécanisme **40** dit interne d'amortissement du contact entre le récipient **2** et le calibre interne **15** et de rappel en position dudit calibre interne. Le dispositif d'inspection **1** comporte également un mécanisme **41** dit externe d'amortissement du contact entre le récipient **2** et le calibre externe **14** et de rappel en position du calibre externe. Chaque mécanisme d'amortissement et de rappel **40**, **41** est ainsi apte d'une part, à amortir le contact intervenant entre un calibre **14**, **15** et le récipient **2** et d'autre part, à ramener chaque calibre **14**, **15** dans sa position initiale ou de repos en l'absence de contact avec le récipient **2**.

Tel que cela ressort plus précisément de la **Fig**. **1**, le calibre externe **14** et le calibre interne **15** sont montés mobiles selon la direction de déplacement par rapport à un support **45** de l'équipage mobile **6**. Ce support **45** qui est bien entendu mobile par rapport au bâti fixe **7** comporte la crémaillère **12** dont l'extrémité inférieure est montée solidaire d'une pièce **46** assurant le maintien et le guidage du calibre externe **14**. Cette pièce de guidage **46** se présente dans l'exemple illustré, sous la forme d'une plaque pourvue d'un trou de passage **47** pour le tube extracteur **29** autorisant ainsi le mouvement de coulissement vertical de la plaque **46** par rapport au tube extracteur **29** fixe. L'extrémité supérieure de la crémaillère **12** est montée solidaire, par une pièce de liaison **48**, à une chemise de guidage **49** s'étendant sensiblement parallèlement à la crémaillère **12**. Cette chemise **49** est guidée en coulissement vertical par rapport au bâti **7** par des organes de guidage **50** de tous types connus en soi. La chemise **49** est montée de manière à s'étendre au moins en partie à l'intérieur du tube extracteur **29**.

Le support **45** est formé ainsi par la crémaillère **12**, la pièce de liaison **48**, la chemise **49** et la plaque **46**. Le calibre externe **14** et le calibre interne **15** sont montés mobiles indépendamment l'un de l'autre par rapport à ce support **45** et à l'aide d'un mécanisme d'amortissement et de rappel respectivement **41**, **40.**

Ainsi, le calibre externe **14** est pourvu, en tant que mécanisme d'amortissement et de rappel **41**, d'au moins un et dans l'exemple illustré de trois axes de guidage **52** montés mobiles par rapport à la plaque **46**. Chaque axe **52** est pourvu d'un ressort de rappel **53** interposé entre le calibre externe **14** et la plaque **46** pour ramener en position de repos, le calibre externe **14**.

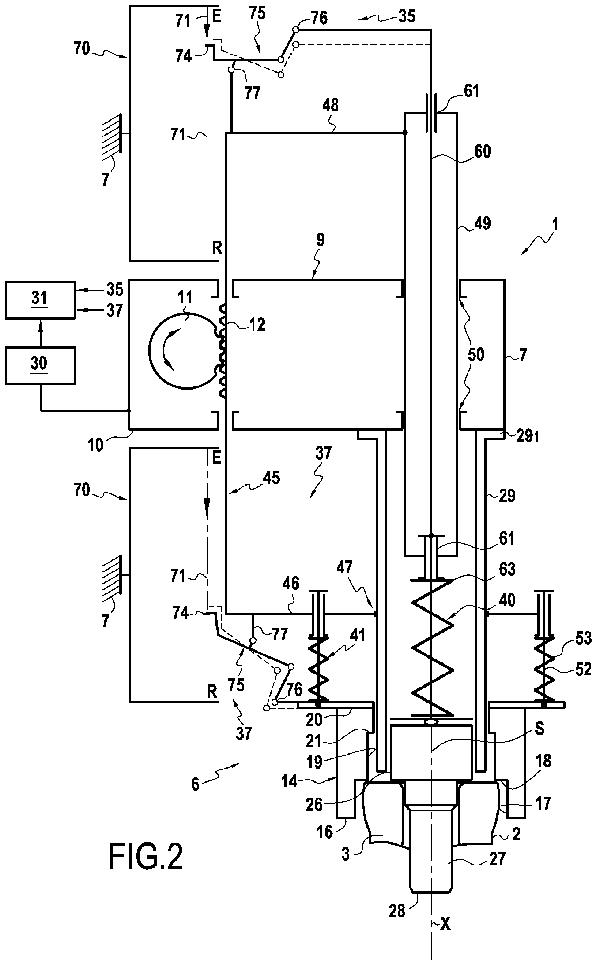

En l'absence de contact entre le calibre externe **14** et la bague **4** d'un récipient, le calibre externe **14** occupe, par rapport au support **45**, une position de repos fixée par les ressorts de rappel **53** et une butée portée par les axes **52** et venant en appui sur la plaque **46** (**Fig. 1**). Lors du contact entre le calibre externe **14** et la bague **4**, le calibre externe **14** est soumis à un effort conduisant à une remontée du calibre externe **14** par rapport au support **45**, conduisant à la compression des ressorts de rappel **53** (**Fig. 2**). Lors de la remontée de l'équipage mobile **6**, l'appui de la bague **4** sur le calibre externe **14** disparaît de sorte que les ressorts de rappel **53** provoquent le retour du calibre externe **14** à sa position initiale de repos.

Le mécanisme d'amortissement et de rappel **40** comporte une tige **60** présentant une première extrémité inférieure montée solidaire du calibre interne **15**. Cette tige **60** est montée à l'intérieur de la chemise **49** qui assure par tous moyens de guidage appropriés **61**, le guidage en coulissement de la tige **60** par rapport à la chemise **49**.

Cette tige **60** comporte avantageusement entre le calibre interne **15** et l'extrémité inférieure de la chemise **49**, un ressort **63**. En l'absence de contact entre le calibre interne **15** et le récipient **2**, le ressort **63** agit sur le calibre interne **15** afin que ce dernier occupe une position de repos par rapport à la chemise de guidage **49**. La tige **60** est maintenue dans cette position à l'aide d'une butée portée par la tige et venant en appui sur la chemise **49** (**Fig. 1**). Dans le cas d'un appui du calibre interne **15** sur la bague **4**, le calibre interne **15** est soumis à un effort conduisant à une remontée de la tige **60** par rapport à la chemise de guidage **49** (**Fig. 2**). Lors de la suppression de l'appui du calibre **15** sur la bague **4**, le ressort **63** tend à ramener le calibre interne **15** à sa position initiale de repos.

Conformément à l'invention, chaque système de détection **35**, **37** du contact intervenant entre un calibre **15**, **14** et le récipient **2** comporte un système d'émission-réception **70** d'un faisceau optique **71** selon une direction parallèle à la direction de déplacement de l'équipage mobile **6.** Selon une caractéristique de l'invention, les systèmes d'émission-réception **70** sont montés et fixés sur le bâti **7**. Chaque faisceau optique **71** est créé selon un segment de longueur au moins égale à la course maximale de l'équipage mobile **6** pour permettre de détecter comme cela sera expliqué dans la suite de la description, l'occurrence de contact sur toute la course de l'équipage mobile **6**.

Chaque système de détection **35**, **37** du contact d'un calibre comporte respectivement un mécanisme **72**, **73** de transformation du mouvement de déplacement d'un calibre **15**, **14** par rapport à l'équipage mobile **6**, en un mouvement venant obstruer ou cesser d'obstruer le faisceau optique **71** pour détecter l'occurrence du contact du calibre, quelle que soit la position de l'équipage mobile **6**. Chaque mécanisme de transformation **72**, **73** est embarqué ou supporté par l'équipage mobile **6**.

Selon une variante de réalisation illustrée sur les dessins, en l'absence du déplacement relatif entre l'équipage mobile **6** et un calibre **15** ou **14**, le faisceau optique **71** n'est pas obstrué ou affecté par le mécanisme de transformation de mouvement **72**, **73**. A contrario, dès qu'intervient un déplacement d'un calibre à la suite de son contact avec le récipient, le mécanisme de transformation de mouvement **72**, **73** est commandé pour obstruer le faisceau optique **71** afin de détecter l'occurrence de contact. En d'autres termes, le mécanisme de transformation de mouvement **72**, **73** crée une obstruction du faisceau optique de sorte que le changement d'état d'obstruction du faisceau optique détecté par le système d'émission-réception **70** permet de signaler l'occurrence du contact du calibre.

Selon une autre variante de réalisation de l'invention, en l'absence du déplacement relatif entre l'équipage mobile **6** et un calibre **15** ou **14**, le faisceau optique **71** est obstrué par le mécanisme de transformation de mouvement **72**, **73**. Chaque système de détection **35**, **37** du contact d'un calibre comporte respectivement un mécanisme **72**, **73** de transformation du mouvement de déplacement d'un calibre **15**, **14** par rapport à l'équipage mobile **6**, en un mouvement venant supprimer ou cesser l'obstruction du faisceau optique **71**. Ainsi, le changement d'état d'obstruction du faisceau est détecté par le système d'émission-réception **70** qui signale l'occurrence du contact du calibre, au moyen du système d'émission-réception **70**, quelle que soit la position de l'équipage mobile **6**. Autrement dit, l'occurrence de contact provoque un mouvement de déplacement d'un calibre **15**, **14** par rapport à l'équipage mobile **6** de sorte que le mécanisme de transformation de mouvement **72**, **73** vient dégager le faisceau optique **71.** Ce mode de détection de contact par dégagement du faisceau est inverse (ou dual) et équivalent au mode par obstruction.

De manière générale, chaque mécanisme de transformation **72**, **73** comporte une cible **74** apte à occuper :
- en l'absence de déplacement d'un calibre, une première position de repos dans laquelle la cible **74** est dégagée par rapport au faisceau optique **71 (****Fig. 1**), ou dans laquelle la cible **74** obstrue le faisceau optique **71**,
- en présence du déplacement relatif entre un calibre et l'équipage mobile **6**, une deuxième position dite de détection dans laquelle la cible **74** obstrue le faisceau optique **71** (**Fig. 2**), ou respectivement dans laquelle la cible **74** cesse d'obstruer le faisceau optique **71**.

Avantageusement, chaque mécanisme de transformation de mouvement **72**, **73** est du type mécanique c'est-à-dire ne nécessite pas de connexion (électrique ou mécanique) entre l'équipage mobile **6** et le bâti fixe **7**. A cet effet, les mécanismes de transformation de mouvement **72**, **73** sont interposés entre l'équipage mobile **6** et les calibres **14**, **15** ou les organes qui y sont liés.

Dans l'exemple illustré aux **Fig. 1** et **2**, les mécanismes de transformation de mouvement **72**, **73** transforment le mouvement de déplacement linéaire des calibres en un mouvement de pivotement de la cible **74** dans un plan contenant le faisceau optique. Selon cet exemple, chaque mécanisme de transformation du mouvement **72**, **73** comporte un système à ciseaux articulés **75** monté entre l'équipage mobile **6** et un calibre **14**, **15**. Tel que cela ressort de l'exemple illustré aux **Fig. 1** et **2**, le mécanisme de transformation **72** de mouvement du calibre interne **15** comporte des ciseaux **75** dont une première branche est reliée par une articulation **76** à l'extrémité de la tige **60** faisant saillie de la chemise **49** et opposée à la première extrémité inférieure montée solidaire du calibre interne **15**. La deuxième branche des ciseaux **75** dont l'extrémité opposée de celle reliée par un pivot à la première branche est pourvue de la cible **74**, est reliée par une articulation **77**, à l'équipage mobile **6** et en particulier à la pièce de liaison **48**.

Le mécanisme de transformation **73** du calibre externe **14** comporte des ciseaux **75** dont une première branche est reliée par une articulation **76** à la deuxième extrémité **20** du calibre externe **14**. La deuxième branche des ciseaux **75** dont l'extrémité opposée de celle reliée par un pivot à la première branche est pourvue de la cible **74**, est reliée par une articulation **76**, à l'équipage mobile **6** et en particulier à la pièce **46** assurant le maintien du calibre externe **14**.

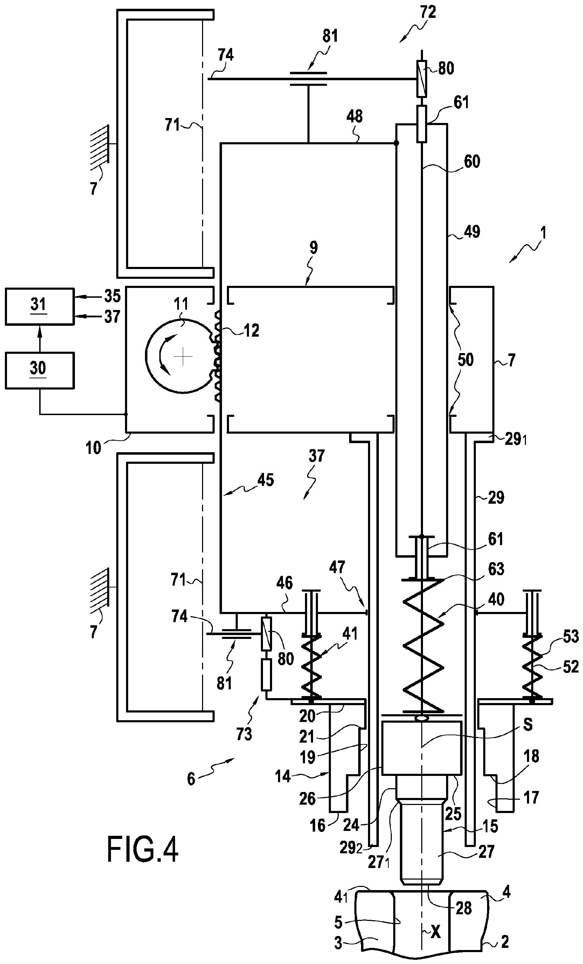

Dans l'exemple illustré à la **Fig. 4**, chaque mécanisme de transformation de mouvement **72**, **73** transforme le mouvement de déplacement linéaire des calibres en un mouvement de rotation dans un plan perpendiculaire à la direction du faisceau optique **71**. Selon cet exemple illustré, les mécanismes de transformation de mouvement **72**, **73** comportent une liaison hélicoïdale **80** associée à une liaison-plan **81** pour permettre de déplacer la cible **74** selon un mouvement de rotation dans un plan perpendiculaire à la direction du faisceau optique **71**. Ainsi, pour le mécanisme de transformation **72** du mouvement du calibre interne **15**, l'élément coulissant de la liaison hélicoïdale **80** est relié à l'extrémité de la tige **60** faisant saillie de la chemise **49** tandis que l'élément tournant est relié à l'élément mobile de la liaison-plan **81**, qui porte la cible **74**. L'élément mobile de la liaison-plan est guidé par la pièce de liaison **48**.

De même, pour le mécanisme de transformation **73** du mouvement du calibre externe **14**, l'élément coulissant de la liaison hélicoïdale **80** est relié à la deuxième extrémité **20** du calibre externe **14** tandis que l'élément tournant est relié à l'élément mobile de la liaison-plan **81** qui porte la cible **74**. L'élément mobile de la liaison-plan **81** est guidé par la pièce **46**.

Bien entendu, les mécanismes de transformation **72**, **73** peuvent être réalisés de manière différente des solutions illustrées sur les dessins. De la même façon, le système d'émission-réception **70** du faisceau optique peut être réalisé de toute manière appropriée. Par exemple, dans l'exemple illustré aux **Fig**. **1** et **2**, le système d'émission-réception **70** du faisceau optique **71** comporte un émetteur **E** du faisceau optique et un récepteur **R** du faisceau optique, montés en vis-à-vis en étant écartés d'au moins la course maximale de l'équipage mobile, un tel système étant appelé couramment fourche ou barrière optique.

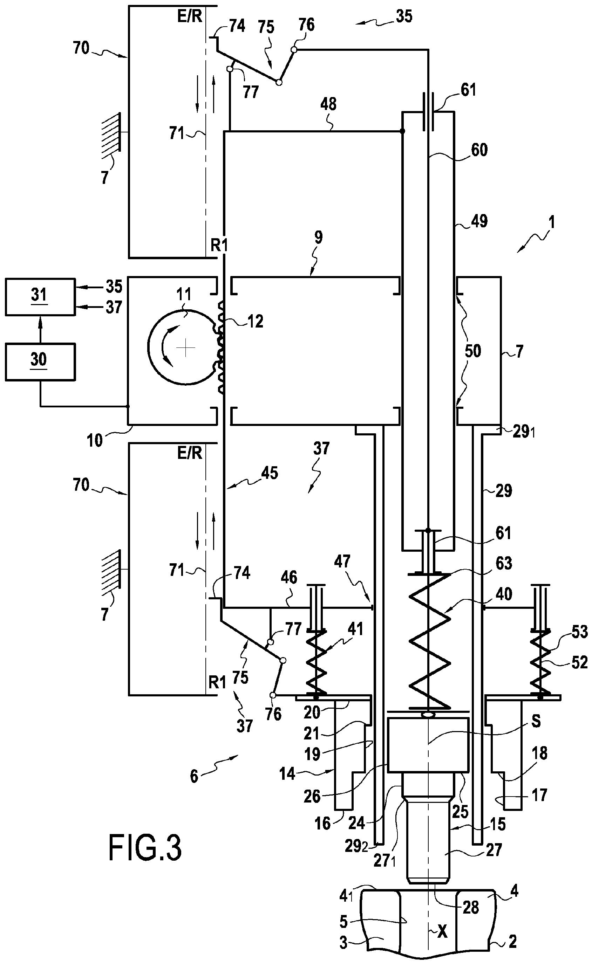

Dans l'exemple illustré à la **Fig. 3**, le système d'émission **70** du faisceau optique **71** comporte un émetteur **E** et un récepteur **R** du faisceau optique, montés ensemble et à l'opposé ou en vis-à-vis desquels est monté un réflecteur optique **R₁.**

Les occurrences de contact détectées par les systèmes de détection **35**, **37** sont transmises à l'unité de traitement **31** qui est apte, à partir des mesures délivrées par le système **30** de mesure de la position de l'équipage mobile **6**, à déterminer la conformité dimensionnelle des bagues et des cois des récipients **2**. En effet, chaque position de contact des calibres **14**, **15** correspond à un contrôle dimensionnel différent de la bague et du col du récipient. A l'aide d'une opération d'étalonnage, il est possible de connaître la position théorique verticale des calibres **14**, **15** correspondant à un récipient sans défaut et par suite à un récipient avec défaut.

Dans la mesure où la position de l'équipage mobile **6** est connue par rapport au bâti **7** c'est-à-dire aussi par rapport au plan de pose des récipients **2**, l'unité de traitement **31** est apte à déterminer la hauteur des récipients à partir de l'occurrence de contact du calibre externe **14** sur la bague du récipient et/ou de l'occurrence de contact du calibre interne **15**.

Le fonctionnement du dispositif d'inspection **1** découle directement de la description qui précède.

Après l'amenée d'un récipient **2** au droit du dispositif d'inspection **1**, le système de motorisation **9** est piloté pour assurer la descente de l'équipage mobile **6**. Dès qu'un calibre **14**, **15** rentre en contact avec le récipient **2**, le contact est détecté à l'aide du système de détection associé **35**, **37**. A cet instant, l'unité de traitement **31** connaît, à l'aide du système de mesure **30**, la position du calibre rentrant en contact avec le récipient de sorte que l'unité de traitement **31** est en mesure de déterminer la conformité dimensionnelle du récipient et le type de défaut détecté pour des récipients dimensionnellement non-conformes. De façon avantageuse, l'unité de traitement **31** connaît, en fonction des occurrences de contact des deux calibres **14**, **15** et du système de mesure **30**, la position de l'équipage mobile **6** au moment des contacts des calibres **14**, **15** avec le récipient **2**. L'unité de traitement **31** effectue, à l'aide de ces mesures et occurrences, des calculs donnant des informations dimensionnelles complémentaires sur les cols et les bagues des récipients **2** et en particulier sur les types de défauts présentés par les récipients **2**.

Ainsi, en fonction de la position verticale occupée par chacun des calibres **14**, **15** lorsqu'intervient au moins un contact avec le récipient, l'unité de traitement **31** est apte à déterminer précisément la conformité dimensionnelle de la bague et du col du récipient. Comme expliqué ci-avant, en fonction de la position verticale occupée par chacun des calibres **14**, **15** lorsqu'intervient au moins un contact avec le récipient, l'unité de traitement **31** est apte à déterminer précisément la conformité dimensionnelle de la bague et du col du récipient, car il est possible de déterminer le type de défaut parmi les défauts suivants :
- défaut de diamètre intérieur du col inférieur à un diamètre minimal toléré (défaut dit de brochage ou PLUG ou bore),
- défaut de diamètre de débouchage inférieur à un diamètre minimal toléré (défaut dit de débouchage),
- défaut de diamètre de débouchage supérieur à un diamètre maximal toléré (défaut dit de débouchage),
- défauts de hauteur supérieure au maximum toléré,
- défauts de hauteur inférieure au minimum toléré,
- défaut de diamètre extérieur inférieur au minimum toléré,
- défaut de diamètre extérieur supérieur au maximum toléré.

Il est à noter qu'à l'aide des occurrences de contact de l'un et/ou l'autre des calibres **14**, **15** avec le récipient **2**, l'unité de traitement **31** peut, selon la position mesurée de l'équipage mobile **6**, commander l'inversion du sens de déplacement du système de motorisation visant à faire remonter l'équipage mobile **6**. En pratique, pour des récipients conformes dimensionnellement, les calibres **14**, **15** rentrent en contact sensiblement simultanément avec le récipient **2**. En cas d'absence d'un récipient (**Fig. 5H**), aucun des systèmes de détection **35**, **37** ne détecte un contact. L'unité de traitement **31** est apte à commander la remontée de l'équipage mobile **6** en pilotant le système de motorisation **9**, lorsque l'équipage mobile **6** atteint une position verticale basse déterminée au préalable.

L'invention n'est pas limitée aux exemples décrits et représentés car diverses modifications peuvent y être apportées sans sortir de son cadre.

## Revendications

1. Dispositif d'inspection pour les bagues et cols de récipients (**2**), comportant :
- un équipage mobile (**6**) entraîné par rapport à un bâti (**7**), en un mouvement alternatif selon une direction de déplacement parallèle à l'axe de symétrie des récipients et avec une course maximale, l'équipage mobile étant équipé d'un calibre externe (**14**) de contrôle de l'extérieur de la bague des récipients et d'un calibre interne (**15**) de contrôle de l'intérieur de la bague et du col des récipients, les calibres externe (**14**) et interne (**15**) étant montés mobiles indépendamment l'un de l'autre et par rapport à l'équipage mobile (**6**) selon une direction de déplacement parallèle à la direction de déplacement de l'équipage mobile,
- un système (**30**) de mesure de la position de l'équipage mobile (**6**) par rapport au bâti, dans la direction de déplacement, les mesures de la position de l'équipage mobile étant fournies à une unité de traitement (**31**),
- un système de détection (**35**) du contact intervenant entre le calibre interne (**15**) et le récipient (**2**), lors du mouvement de l'équipage mobile (**6**), les occurrences de contact étant fournies à l'unité de traitement (**31**),
- un système de détection (**37**) du contact intervenant entre le calibre externe (**14**) et le récipient (**2**), lors du mouvement de l'équipage mobile, les occurrences de contact étant fournies à l'unité de traitement (**31**),
- et une unité de traitement (**31**) permettant qu'en fonction des mesures de la position de l'équipage mobile (**6**) et des occurrences de contact entre les calibres (**14**, **15**) et le récipient (**2**), de déterminer la conformité dimensionnelle des bagues et/ou cols des récipients et les types de défauts pour les récipients dimensionnellement non conformes, **caractérisé en ce que** chaque système de détection (**35**, **37**) du contact d'un calibre comporte :
- un système d'émission-réception (**70**) d'un faisceau optique (**71**) selon une direction parallèle à la direction de déplacement de l'équipage mobile et selon un segment de longueur au moins égale à la course maximale de l'équipage mobile (**6**), le système d'émission-réception étant porté par le bâti,
- un mécanisme (**72**, **73**) embarqué sur l'équipage mobile (**6**), de transformation du mouvement de déplacement du calibre (**14**, **15**) par rapport à l'équipage mobile (**6**), en un mouvement venant obstruer ou cesser d'obstruer le faisceau optique (**71**) pour détecter l'occurrence du contact du calibre quelle que soit la position de l'équipage mobile (**6**).

2. Dispositif selon la revendication 1, **caractérisé en ce que** le mécanisme de transformation de mouvement (**72**, **73**) transforme le mouvement de déplacement linéaire du calibre (**14**, **15**) en un mouvement de pivotement d'une cible (**74**) dans un plan contenant le faisceau optique.

3. Dispositif selon la revendication 2, **caractérisé en ce que** le mécanisme de transformation de mouvement (**72**, **73**) comporte un mécanisme à ciseaux (**75**) articulés et monté entre l'équipage mobile (**6**) et le calibre (**14**, **15**).

4. Dispositif selon la revendication 1, **caractérisé en ce que** le mécanisme de transformation de mouvement (**72**, **73**) transforme le mouvement de déplacement linéaire du calibre en un mouvement de rotation dans un plan perpendiculaire à la direction du faisceau optique.

5. Dispositif selon la revendication 4, **caractérisé en ce que** le mécanisme de transformation de mouvement (**72**, **73**) comporte une liaison hélicoïdale (**81**) associée à une liaison plan (**82**).

6. Dispositif selon la revendication 1, **caractérisé en ce que** le système d'émission-réception (**70**) du faisceau optique comporte un émetteur (**E**) et un récepteur (**R**) de faisceau optique (**71**) montés en vis-à-vis en étant écartés d'au moins la course maximale de l'équipage mobile (**6**).

7. Dispositif selon la revendication 1, **caractérisé en ce que** le système d'émission-réception (**70**) du faisceau optique comporte un émetteur (**E**) et un récepteur (**R**) du faisceau optique montés ensemble et à l'opposé desquels est monté un réflecteur optique (**R₁**).

## Patentansprüche

1. Inspektionsvorrichtung für Ringe und Hälse von Behältern (2), umfassend:
- ein bewegliches Organ (6), das in einer Hin- und Herbewegung in einer Verschiebungsrichtung, die parallel zur Symmetrieachse der Behälter ist, und mit einem maximalen Hub relativ zu einem Gestell (7) angetrieben wird, wobei das bewegliche Organ mit einem äußeren Kaliber (14) zum Überprüfen der Außenseite des Rings der Behälter und einem inneren Kaliber (15) zum Überprüfen der Innenseite des Rings und des Halses der Behälter ausgestattet ist, wobei der äußere (14) und der innere (15) Kaliber unabhängig voneinander und in Bezug auf das bewegliche Organ (6) in einer Verschiebungsrichtung, die parallel zur Bewegungsrichtung des beweglichen Organs ist, beweglich montiert sind,
- ein System (30) zum Messen der Position des beweglichen Organs (6) relativ zu dem Gestell in die Verschieberichtung, wobei die Messungen der Position des beweglichen Organs einer Verarbeitungseinheit (31) bereitgestellt werden,
- ein Erfassungssystem (35) des Kontakts, der während der Bewegung des beweglichen Organs (6) zwischen dem inneren Kaliber (15) und dem Behälter (2) stattfindet, wobei die Häufigkeit des Kontakts der Verarbeitungseinheit (31) bereitgestellt werden,
- ein Erfassungssystem (37) des Kontakts, der während der Bewegung des beweglichen Organs zwischen dem äußeren Kaliber (14) und dem Behälter (2) stattfindet, wobei die Häufigkeit des Kontakts der Verarbeitungseinheit (31) bereitgestellt wird,
- und eine Verarbeitungseinheit (31), die in Abhängigkeit von den Messungen der Position des beweglichen Organs (6) und der Häufigkeit des Kontakts zwischen den Kalibern (14, 15) und dem Behälter (2) ermöglicht, die Maßhaltigkeit der Ringe und/oder Hälse der Behälter und der Arten von Fehlern bei abmessungsmäßig nicht übereinstimmenden Behältern zu bestimmen,
**dadurch gekennzeichnet, dass** jedes Erfassungssystem (35, 37) des Kontakts eines Kalibers aufweist:
- ein Sende-Empfangssystem (70) eines optischen Strahls (71) in einer Richtung, die parallel zur Bewegungsrichtung des beweglichen Organs ist, und gemäß einem Segment von einer Länge, die mindestens dem maximalen Hub des beweglichen Organs (6) entspricht, wobei das Sende-Empfangssystem von dem Gestell getragen wird,
- einen Mechanismus (72, 73), der in dem beweglichen Organ (6) eingebaut ist, zum Umwandeln der Verschiebungsbewegung des Kalibers (14, 15) in Bezug auf das bewegliche Organ (6) in eine Bewegung, die den optischen Strahl (71) blockiert oder aufhört, ihn zu blockieren, um die Häufigkeit eines Kontakts des Kalibers unabhängig von der Position des beweglichen Organs (6) zu erfassen.

2. Vorrichtung nach Anspruch 1, **dadurch gekennzeichnet, dass** der Mechanismus zum Umwandeln der Bewegung (72, 73) die lineare Verschiebungsbewegung des Kalibers (14, 15) in eine Schwenkbewegung eines Ziels (74) in einer Ebene umwandelt, die den optischen Strahl enthält.

3. Vorrichtung nach Anspruch 2, **dadurch gekennzeichnet, dass** der Mechanismus zum Umwandeln der Bewegung (72, 73) einen Mechanismus mit angelenkter Schere (75) aufweist und zwischen dem beweglichen Organ (6) und dem Kaliber (14, 15) befestigt ist.

4. Vorrichtung nach Anspruch 1, **dadurch gekennzeichnet, dass** der Mechanismus zum Umwandeln der Bewegung (72, 73) die lineare Verschiebungsbewegung des Kalibers in eine Drehbewegung in einer Ebene umwandelt, die senkrecht zu der Richtung des optischen Strahls ist.

5. Vorrichtung nach Anspruch 4, **dadurch gekennzeichnet, dass** der Mechanismus zum Umwandeln der Bewegung (72, 73) eine spiralförmige Verbindung (81) aufweist, die mit einer ebenen Verbindung (82) verbunden ist.

6. Vorrichtung nach Anspruch 1, **dadurch gekennzeichnet, dass** das Sende-Empfangssystem (70) des optischen Strahls einen Sender (E) und einen Empfänger (R) des optischen Strahls (71) aufweist, die gegenüberliegend befestigt sind, indem sie um mindestens den maximalen Hub des beweglichen Organs (6) beabstandet sind.

7. Vorrichtung nach Anspruch 1, **dadurch gekennzeichnet, dass** das Sende-Empfangssystem (70) des optischen Strahls einen Sender (E) und einen Empfänger (R) des optischen Strahls aufweist, die zusammen befestigt sind und gegenüberliegend von denen ein optischer Reflektor (R₁) befestigt ist.

## Claims

1. An inspection device for inspecting the rings and the necks of containers (2), the device comprising:
• movable equipment (6) driven relative to a frame (7) with reciprocating motion along a travel direction parallel to the axis of symmetry of the containers and with a maximum stroke, the movable equipment being provided with an external gauge (14) for inspecting the outsides of the rings of containers and with an internal gauge (15) for inspecting the insides of the rings and of the necks of containers, the external and internal gauges (14, 15) being mounted to be movable independently of each other and relative to the movable equipment (6) in a travel direction parallel to the travel direction of the movable equipment;
• a measurement system (30) for measuring the position of the movable equipment (6) relative to the frame, in the travel direction, the measurements of the position of the movable equipment being supplied to a processor unit (31);
• a detection system (35) for detecting contact occurring between the internal gauge (15) and the container (2) during movement of the movable equipment (6), occurrences of contact being supplied to the processor unit (31);
• a detection system (37) for detecting contact occurring between the external gauge (14) and the container (2) during movement of the movable equipment, occurrences of contact being supplied to the processor unit (31); and
• a processor unit (31) acting as a function of the measurements of the position of the movable equipment (6) and of occurrences of contact between the gauges (14, 15) and the container (2) to determine whether the rings and/or the necks of the containers have dimensions that are in compliance and to determine the types of defect for containers that are dimensionally not in compliance;
the device being **characterized in that** each detection system (35, 37) for detecting contact with a gauge comprises:
• an emitter and receiver system (70) for emitting and receiving a light beam (71) in a direction parallel to the travel direction of the movable equipment and over a segment of length that is not less than the maximum stroke of the movable equipment (6), the emitter and receiver system being carried by the frame; and
• a movement transformation mechanism (72, 73) carried by the movable equipment (6), for transforming the travel movement of the gauge (14, 15) relative to the movable equipment (6) into a movement that obstructs or ceases to obstruct the light beam (71) in order to detect the occurrence of contact with the gauge regardless of the position of the movable equipment (6).

2. A device according to claim 1, **characterized in that** the movement transformation mechanism (72, 73) transforms the linear travel movement of the gauge (14, 15) into pivoting movement of a target (74) in a plane containing the light beam.

3. A device according to claim 2, **characterized in that** the movement transformation mechanism (72, 73) includes a scissors mechanism (75) hinged and mounted between the movable equipment (6) and the gauge (14, 15).

4. A device according to claim 1, **characterized in that** the movement transformation mechanism (72, 73) transforms the linear travel movement of the gauge into rotary movement in a plane perpendicular to the direction of the light beam.

5. A device according to claim 4, **characterized in that** the movement transformation mechanism (72, 73) includes a helical connection (81) associated with a planar linkage (82) .

6. A device according to claim 1, **characterized in that** the emitter and receiver system (70) for emitting and receiving the light beam comprises an emitter (E) and a receiver (R) for a light beam (71) that are mounted facing each other and that are spaced apart from each other by at least the maximum stroke of the movable equipment (6).

7. A device according to claim 1, **characterized in that** the emitter and receiver system (70) for emitting and receiving the light beam comprise an emitter (E) and a receiver (R) of the light beam that are mounted together with an optical reflector (R₁) being mounted opposite them.
